# DEMANDE DE BREVET EUROPEEN

(11) **EP 0 586 306 A2**
(43) Date de publication de la demande: **09.03.1994**
(21) Numéro de dépôt: 93402142.9
(22) Date de dépôt: 02.09.1993
(51) Int. Cl.: B60Q 1/04, F16B 19/02

(54) **Système de montage réglable d'un dispositif d'éclairage ou de signalisation de véhicule automobile sur une partie fixe solidaire du véhicule et dispositif ainsi équipé**

(30) Priorité: 04.09.1992 FR 9210583
(71) Demandeur: VALEO VISION, 93000 Bobigny (FR)
(72) Inventeur: Chevance, Gérard, F-77200 Torcy (FR)
(74) Mandataire: Martin, Jean-Jacques

(57) **Abrégé**

L'invention concerne un système de montage réglable de deux éléments dont l'un constitue une partie d'un dispositif d'éclairage ou de signalisation de véhicule automobile sur une partie fixe (2) solidaire du véhicule constituant l'autre élément, l'un des éléments étant porté par un support (1) monté coulissant dans une glissière (20) de l'autre élément, qui comporte des moyens de serrage comprenant une vis (3) adaptée pour appliquer fermement le support (1) contre la glissière (20) afin de l'y bloquer dans la position voulue.

Le système est remarquable par le fait qu'il comporte une entretoise sécable (5) qui autorise l'application du support (1) contre la glissière (20) seulement lorsque l'effort de serrage atteint un seuil prédéterminé provoquant la rupture de l'entretoise (5).

L'invention concerne également le dispositif ainsi équipé.

## Description

La présente invention concerne un système de montage réglable d'un dispositif d'éclairage ou de signalisation de véhicule automobile sur une partie fixe solidaire du véhicule. Ladite partie fixe est par exemple un élément de carrosserie.

L'invention concerne également un dispositif d'éclairage ou de signalisation de véhicule ainsi équipé.

Lors du montage des dispositifs d'éclairage et de signalisation sur la carrosserie d'un véhicule se pose notamment le problème de leur alignement par rapport à la carrosserie ou de leur affleurement par rapport à celle-ci. En effet, il est souvent nécessaire de devoir compenser certaines tolérances de fabrication de la carrosserie, de l'ordre de quelques millimètres.

La présente invention vise à proposer un système de montage d'un dispositif d'éclairage ou de signalisation de véhicule sur une partie fixe du véhicule, telle qu'un élément de carrosserie, qui autorise, dans un premier temps le montage effectif du dispositif sur le véhicule puis, dans un second temps, l'ajustement du dispositif pour compenser les tolérances de fabrication.

Il s'agit d'un système simple à mettre en place, peu coûteux et fiable. Il permet d'obtenir un bon alignement du dispositif par rapport à la carrosserie du véhicule.

On connaît déjà par EP-A-0 430 814 une capsule pour le montage d'une tête de vis de réglage sur l'arrière d'un projecteur, qui comporte une partie sécable. Cependant, le problème résolu par cette capsule connue, à savoir un verrouillage de l'encliquetage de la capsule sur le réflecteur, est sans rapport avec celui de la présente invention. Ainsi, cette capsule n'est pas à même d'assurer tout d'abord un montage avec jeu, pour ajustement ultérieur. Ainsi, rien n'inciterait l'homme de l'art à modifier une telle capsule pour l'utiliser dans le contexte de la présente invention.

Selon l'invention, le système de montage réglable de deux éléments, dont l'un constitue une partie d'un dispositif d'éclairage ou de signalisation de véhicule automobile sur une partie fixe solidaire du véhicule, qui forme l'autre élément, l'un des éléments étant porté par un support monté coulissant dans une glissière de l'autre élément, qui comporte des moyens de serrage comprenant une vis adaptée pour appliquer fermement le support contre la glissière afin de l'y bloquer dans la position voulue, est remarquable par le fait qu'il comporte une entretoise sécable qui autorise l'application du support contre la glissière seulement lorsque l'effort de serrage atteint un seuil prédéterminé provoquant la rupture de l'entretoise.

Selon d'autres caractéristiques avantageuses mais non limitatives :
- ladite entretoise a la forme d'un manchon entourant la vis, la rupture étant obtenue par compression axiale ;
- ladite entretoise est formée de deux parties tubulaires raccordées l'une à l'autre par une zone de faible résistance ;
- les deux parties tubulaires présentent des diamètres différents ;
- les deux parties tubulaires sont de même diamètre et sont raccordées l'une à l'autre par au moins deux pattes qui s'étendent selon des génératrices desdites parties tubulaires.

Par ailleurs, l'invention concerne un dispositif d'éclairage ou de signalisation de véhicule automobile équipé d'un système tel que décrit ci-dessus.

D'autres caractéristiques et avantages de l'invention apparaîttront à la lecture de la description détaillée d'un mode de réalisation préférentiel, faite en référence aux dessins annexés dans lesquels :
- la figure 1 est une vue du système de l'invention, coupé par un plan vertical longitudinal ;
- la figure 2 est une vue du système de la figure 1, coupé par un plan horizontal transversal ;
- la figure 3 est une vue analogue à la figure 1, l'entretoise formant partie du système étant cassée ;
- la figure 4 est une vue du système de la figure 3, coupée par un plan horizontal transversal, le support étant appliqué contre la glissière ;
- la figure 5 est une vue en perspective d'une variante de réalisation de l'entretoise.

Le système de la présente invention permet le réglage d'un dispositif d'éclairage de signalisation de véhicule automobile sur une partie fixe du véhicule.

Sur les figures annexées, la référence 1 désigne un support qui porte le dispositif évoqué plus haut. Ce support présente une forme parallèlépipédique allongée et est disposé verticalement. Il comporte un trou taraudé 10 qui débouche sur deux de ses grandes faces opposées.

La partie fixe du véhicule sur laquelle le dispositif est amené à être mis en place porte la référence numérique 2. Il s'agit par exemple d'un élément de carrosserie. Dans l'exemple représenté sur les figures, cette partie fixe 2 a une forme parallèlépipédique allongée avec des arêtes arrondies.

La partie 2 comporte une glissière verticale 20 qui débouche sur l'une de ses grandes faces 200. Cette glissière communique avec la face 202 opposée à la face 200 par une ouverture 21. Celle-ci est formée, de la glissière 20 à la face 202, d'un premier tronçon 211 en forme de parallélépipède rectangle allongé disposé verticalement et d'un second tronçon 210 de mêmes forme et orientation mais de plus petite taille. La glissière 20 ainsi que les tronçons 210 et 211 sont disposés perpendiculairement à un axe transversal XY.

Comme le montrent les figures, la forme du support 1 est complémentaire de celle de la glissière 20 de sorte qu'il peut coulisser à l'intérieur de cette dernière.

Le système de l'invention comporte des moyens de serrage qui consistent en une vis 3 adaptée pour appliquer fermement le support 1 contre la glissière 20. Cette vis s'étend selon l'axe XY évoqué plus haut et traverse l'ouverture 21 ainsi que le trou taraudé 10 du support 1. Sa tête 30 prend appui contre une rondelle 4 interposée entre cette dernière et la face 202 de la partie fixe 2, au niveau de l'ouverture 21, tandis que son extrémité 31 ressort de l'autre côté du support 1 par le trou 10.

Selon une caractéristique importante de l'invention, le système comporte une entretoise 5 qui a la forme d'un manchon entourant la vis 3 et qui est monté entre la tête de cette dernière et le support 1.

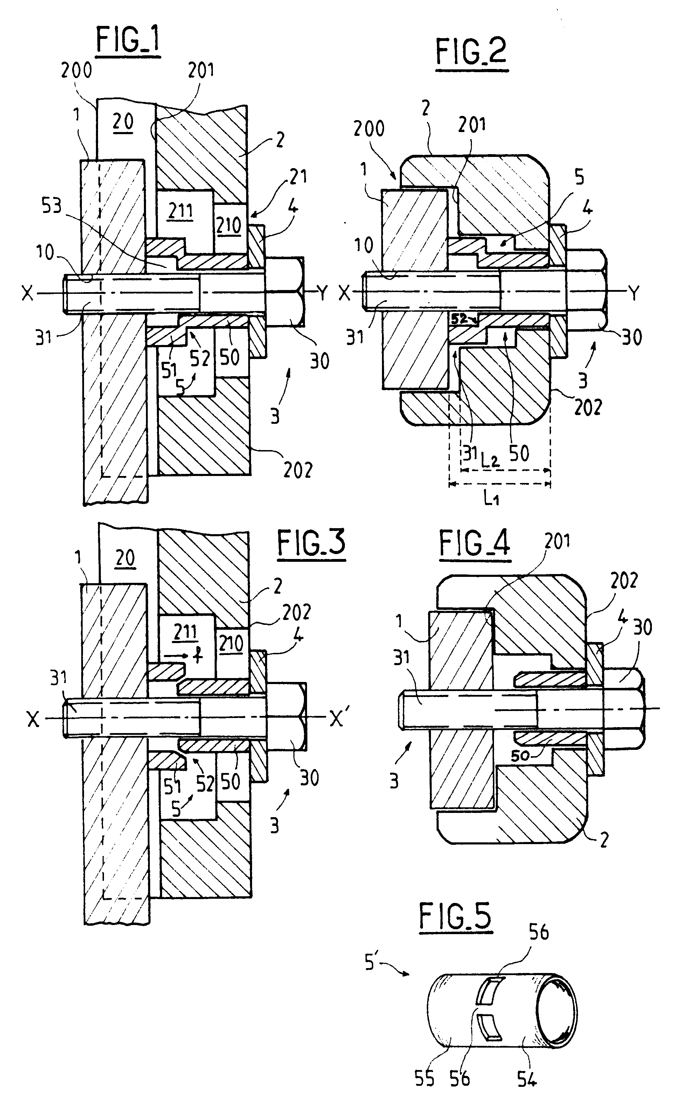

Dans l'exemple représenté aux figures 1 à 4, cette entretoise est formée de deux parties tubulaires 50 et 51 de diamètres différents, la partie 51 de plus grand diamètre étant disposé du côté du support 1. La zone de jonction 52 de ces deux parties tubulaires est peu épaisse et de faible résistance.

Ainsi que le montre précisément la figure 2, l'entretoise présente suivant la direction XY une longueur L1 légèrement supérieure à la longueur L2 de l'ouverture 21.

Lors du montage du dispositif sur la partie fixe de véhicule, on met en place la vis 3 à l'intérieur de l'ouverture 21 en ayant préalablement fait coulisser le long de sa tige l'entretoise 5. On positionne alors le support 1 à l'entrée de la glissière 20 et on provoque le serrage de la vis 3.

On notera que le vissage peut s'effectuer sans intervention de maintien manuel du support 1, celui-ci étant bloqué latéralement dans la glissière.

Dans un premier temps, on opère un serrage modéré de façon à ce que ledit support vienne en butée contre l'extrémité de l'entretoise 5, comme le montrent les figures 1 et 2. En quelque sorte, le support est prépositionné à l'intérieur de la glissière, tout en conservant la possibilité de se déplacer suivant l'axe longitudinal de celle-ci.

Afin d'appliquer fermement le support contre le fond de glissière, c'est-à-dire contre sa face 201, on continue à provoquer le serrage de la vis 3. L'effort de serrage augmente donc progressivement. Cet effort se traduit par une compression de l'entretoise 5 dirigée axialement dans le sens de la flèche f. La zone 52 étant de faible résistance, lorsque l'effort de serrage a atteint un seuil prédéterminé, l'entretoise se rompt au niveau de cette zone, en deux morceaux. Par conséquent il n'existe plus de barrière matérielle empêchant le rapprochement du support en direction du fond de glissière. En continuant à serrer la vis, le support se trouve donc appliqué fermement contre la glissière 20, comme le montre la figure 4. Au cours de cette opération, on a pris soin de positionner le dispositif d'éclairage ou de signalisation porté par le support pour qu'il se trouve par exemple parfaitement aligné avec la partie fixe du véhicule sur laquelle il est monté.

Bien entendu, il est possible de prévoir un jeu d'entretoises de longueur différente de façon à pouvoir s'adapter aux différentes tolérances de fabrication des carrosseries.

On a représenté à la figure 5 une variante 5' de réalisation de l'entretoise. Celle-ci est formée de deux parties tubulaires 54 et 55 de même diamètre qui sont raccordées l'une à l'autre par une série de pattes 56 qui s'étendent selon des génératrices des parties tubulaires. Lorsque l'effort de compression s'applique sur cette entretoise, les pattes offrent peu de résistance si bien qu'au-delà d'un seuil déterminé, l'entretoise se rompt en deux parties distinctes qui se rapprochent l'une de l'autre et qui permettent la mise en place du support 1 en fond de glissière.

L'effort de serrage nécessaire pour provoquer la rupture des entretoises 5 et 5' dépend bien entendu du dimensionnement de la zone 52 et, respectivement du nombre et de l'épaisseur des pattes 56.

Bien que dans la description qui précède, I'élément 1 soit solidaire du dispositif d'éclairage ou de signalisation et l'élément 2 solidaire de la carrosserie (ou d'un autre élément fixe du véhicule), une disposition inverse est bien entendu possible.

## Revendications

1. Système de montage réglable de deux éléments dont l'un constitue une partie d'un dispositif d'éclairage ou de signalisation de véhicule automobile sur une partie fixe (2) solidaire du véhicule constituant l'autre élément, l'un des éléments étant porté par un support (1) monté coulissant dans une glissière (20) de l'autre élément, qui comporte des moyens de serrage comprenant une vis (3) adaptée pour appliquer fermement le support (1) contre la glissière (20) afin de l'y bloquer dans la position voulue, caractérisé par le fait qu'il comporte une entretoise sécable (5) qui autorise l'application du support (1) contre la glissière (20) seulement lorsque l'effort de serrage atteint un seuil prédéterminé provoquant la rupture de l'entretoise (5).

2. Système de montage selon la revendication 1, caractérisé en ce que ladite entretoise (5) a la forme d'un manchon entourant la vis (3), la rupture étant obtenue par compression axiale.

3. Système de montage selon la revendication 2, caractérisé en ce que ladite entretoise est formée de deux parties tubulaires (50, 51 ; 54, 55) raccordées l'une à l'autre par une zone de faible résistance.

4. Système de montage selon la revendication 3, caractérisé en ce que les deux parties tubulaires (50, 51) présentent des diamètres différents.

5. Système de montage selon la revendication 3, caractérisé en ce que les deux parties tubulaires (54, 55) sont de même diamètre et sont raccordées l'une à l'autre par au moins deux pattes (56) qui s'étendent selon des génératrices desdites parties tubulaires.

6. Dispositif d'éclairage ou de signalisation de véhicule automobile, caractérisé en ce qu'il est équipé d'un système conforme à l'une des revendications 1 à 5.
